# EUROPEAN PATENT SPECIFICATION

(11) **EP 1 285 163 B1**
(45) Date of publication and mention of the grant of the patent: **20.12.2006**
(21) Application number: 00927667.6
(22) Date of filing: 29.05.2000
(51) Int. Cl.: F02M 35/024

(54) **AIR GUIDED FILTER FOR INTERNAL COMBUSTION ENGINE**
LUFTFÜHRUNGSFILTER FÜR EINE BRENNKRAFTMASCHINE
FILTRE A AIR GUIDE POUR MOTEUR A COMBUSTION INTERNE

(43) Date of publication of application: 26.02.2003
(73) Proprietor: Wijaya, Heru Prasanta, Surabaya 60226 (ID)
(72) Inventor: Wijaya, Heru Prasanta, Surabaya 60226 (ID)
(74) Representative: RACKETTE Partnerschaft Patentanwälte
(86) International application number: PCT/IB2000/000727
(87) International publication number: WO 2001/092713

(56) References cited:
- EP-A- 0 597 173
- WO-A-94/05906
- FR-A- 1 398 905
- US-A- 5 947 081

## Description

### Technical Field of the invention

The present invention relates to an air filter for an internal combustion engine, comprising a corrugated filter plate with upper and lower portions which are attached to a pair of support rings and an air guide that extends parallel to the filter plate and is provided with a plurality of holes uniformly disposed about the air guide.

### Background of the invention

Nowadays, the internal combustion engines are designed to have a high performance, such as a high power resulting from better combustion. Such better combustion produces an optimal power and unharmful combustion residue to the environment.

Internal combustion engines at present are of ample use as driving means in agriculture machinery, industrial devices and electric generators.

Environmental factors and optimality of fuel per unit power consumed by an internal combustion engine as well as combustion of mixed fuel and air in the combustion chamber of an internal combustion engine can be improved. Improved combustion mixture of air and fuel can be achieved when air to be mixed with fuel has met certain conditions.

An air filter as defined by the preamble of claim 1 is known from EP 0 597 173 A1 and is capable of improving a combustion efficiency of the engine of a vehicle. A cylindrical transit member which is inserted into the filter body and spaced from the filter body at a slight gap comprises a cylindrical member having a multitude of through-holes on the entire surface thereof. The surface around the holes is covered with a functional film comprising a dispersion of particles of a silicon mineral and yttrium, barium and cerium.

An air flow system for an internal combustion engine which includes a cylindrical air cleaner is described in US 5 947 081 A. The cylindrical air cleaner is divided into a centrally disposed air swirling zone and a laterally disposed filter zone. A swirling device disposed in the air swirling zone includes a plurality of flexible vane members which extend radially toward the periphery of the swirling device for increasing air flow. At least one elongated slit is disposed in each of the plurality of vane members for preventing the generation of negative pressure behind the vane members.

It is an object of the invention to provide an air filter with an air guide that is capable of improving a combustion efficiency of an internal combustion engine allowing an effective mixing of air and fuel without unwanted turbulence.

### Summary of the invention

The above problem is solved by an air filter for an internal combustion engine, comprising a corrugated filter body with upper and lower portions which are attached to a pair of support rings and an air guide that extends parallel to the filter body and is provided with a plurality of holes uniformly disposed about the air guide, which is characterized in that each hole is bounded by a section having a half-cone cross-sectional shape wherein the air guide is placed at a certain elevation angle with respect to the support rings and wherein air flowing through the filter through the air guide is guided as well as rotated, such that when mixed with fuel a uniform air-fuel mixture is generated.

Based on the reasons disclosed earlier, a device is provided which can improve the combustion quality of air and fuel mixture in an internal combustion engine. The device is integrally arranged with an air filter and is called as air guided filter.

An advantage of the invention is to improve the performance of an internal combustion engine without changing the basic construction of the engine. The improvement encompasses only the action of changing the existing air filter with an air filter according to the present invention. By using the air filter equipped with an air guide, the air flowing into the combustion chamber stays clean since it has been filtered and guided in such a way that the quality of the air and fuel mixed is improved. The combustion in the internal combustion chamber will thus be improved.

### Brief description of the drawings

These and other features and advantages of the present invention will be better understood by reference to the following detailed description when considered in conjunction with the accompanying drawings, wherein:
Figure 1A illustrates a partial top view of an air filter on which an air guide is attached on an outer part of a filter paper and the two ends of the air guide are bound by a supporting ring;
Figure 1 B illustrates a side view of the air filter shown in Figure 1 A, the side view being partially sectioned to show the filter paper;
Figure 2A illustrates a partial top view of an air filter on which an air guide is attached on the inner part of the air filter and the two ends of the air guide are bound by a supporting ring;
Figure 2B illustrates a sectional view of the air filter shown in Figure 2A;

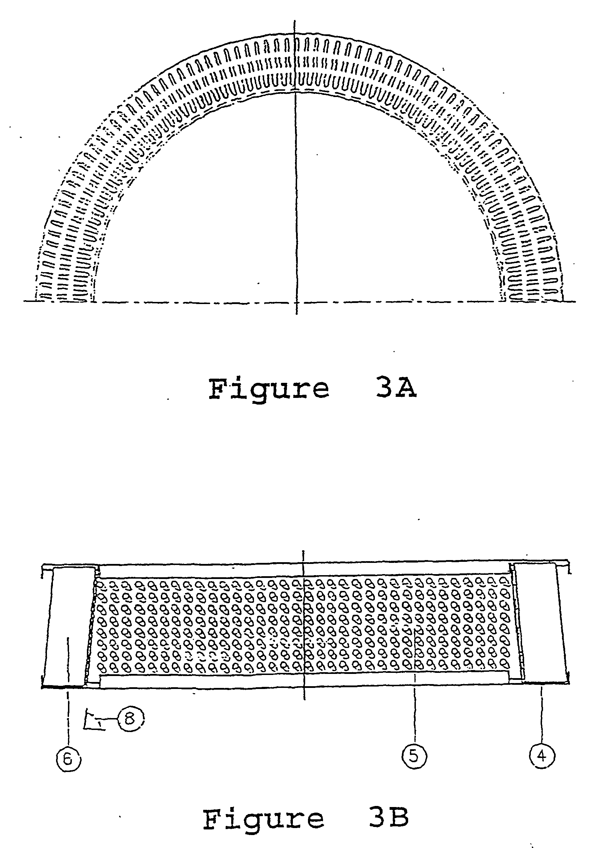

Figure 3A is a partial top view of an air filter having an air guide fixed to the inner filter paper forming an elevation angle with supported ring;
Figure 3B illustrates a sectional view of the air filter as shown in Figure 3A;
Figure 4A and 4B are a front view, partial cross-sectional view and partial enlarged view, respectively of an air guide according to the present invention;
Figure 5 illustrates a top, side and end views, respectively of an air guide that is attached to an air filter having a generally square shape; and
Figure 6 illustrates diagramatically the position of an air filter in an internal combustion engine according to the present invention.

### Detailed description of the invention

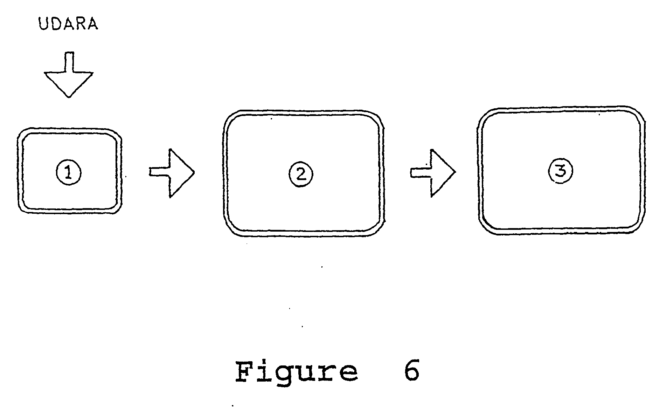

In an internal combustion engine an air filter 1 is placed before a manifold or air channel 2 and a combustion chamber 3 of an engine, as for example shown schematically in Figure 6.

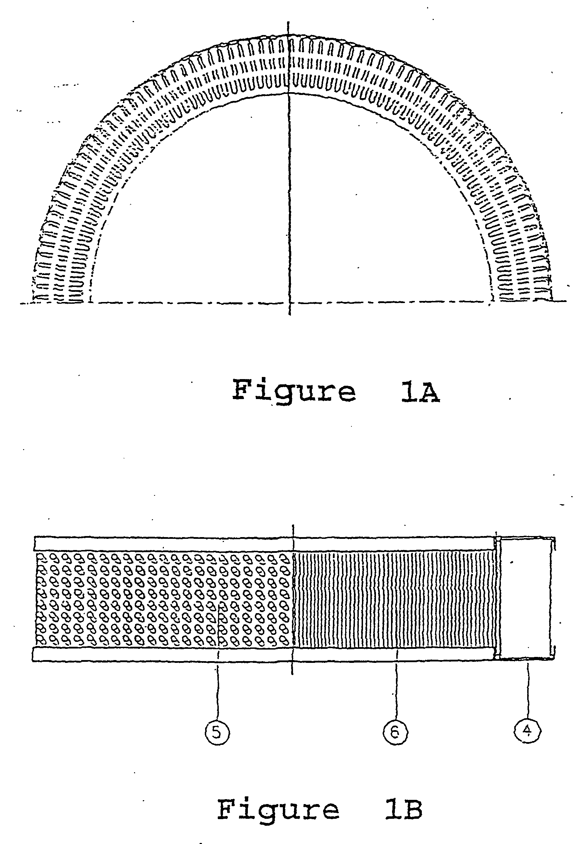

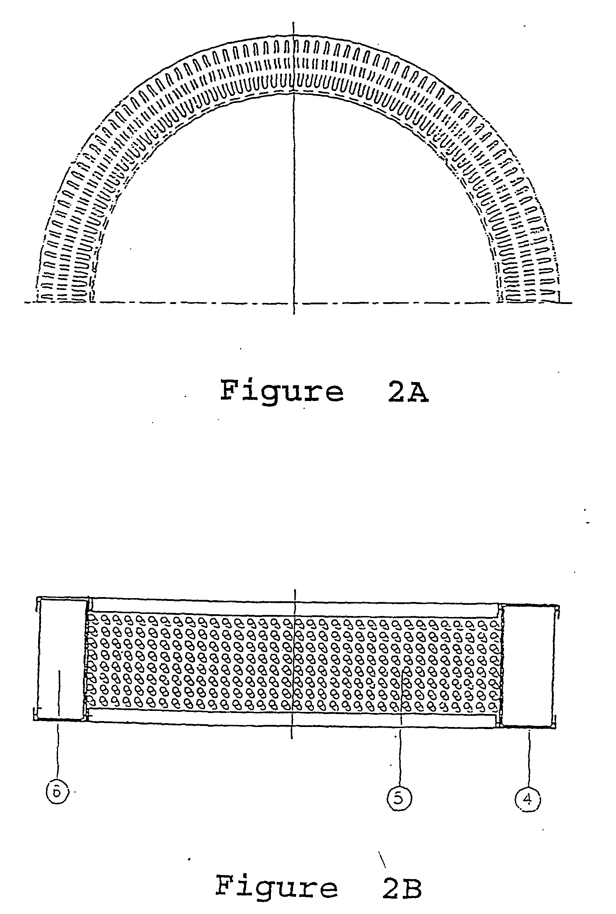

Referring to Figures 1A and 1B, an air guide 5 can be placed on the outer part of inner part of air filter 1 or, on Figure 2, on the inner part of air filter 1.

The air guide 5 of air filter 1 is placed parallel to the corrugated filter paper 6 with upper and lower portions thereof are attached on filter support ring 4. The air guide 5 may be placed in the inner part of the air filter (as shown in Figures 2A and 2B), or on the outer part of the air filter (Figure 1A and 1 B) depending upon the required design of the air filter.

With air guide 5 being attached to the air filter 1 in accordance with an embodiment of the present invention, air flowing into the manifold 2 will be directed in the same direction. When air guide 5 is elevated with a certain elevation angle 8, the air flowing into the filter will be guided as well as rotated. The rotated air will create a mixing effect when mixed with fuel such that the mixtures will be uniform. The mixtures of air and fuel uniformly mixed when combusted in combustion chamber, will create an improved combustion, for which it will sequently increase internal combustion engine performance.

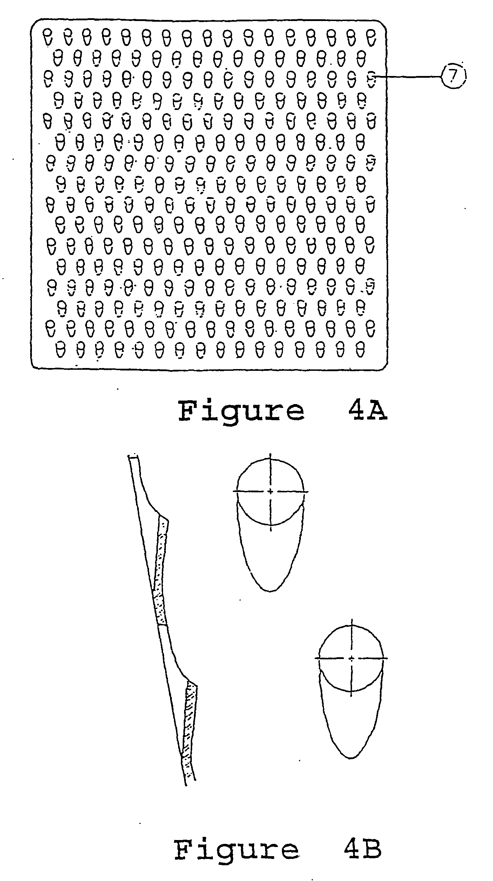

The air guide 5 according to the present invention may be made from materials such as a metal plate or other suitable materials provided with configurations having half-cone cross-sectional shapes which define a plurality of holes 7 disposed on the whole surface of the air guide 5 with uniform measurement and space. Figure 4 shows how the measurement and space between the pores or holes 7 are made uniform at the face of air guide 5.

Since the holes 7 have a half-cone cross-sectional shape, they will force the air to form grooves or air passages and the direction of the holes 7 will define the direction of the air flows. When the holes are in the same direction and uniform, the air grooves or air passages formed will be in the same direction and uniform such that the air flowing into the air channel 2 will be in the same direction and uniform.

The direction of the grooves or air passages are defined by direction of the holes 7 and also the elevation angle 8 of the air guide 5 with respect to the support ring 4 of the air filter 1, since support ring 4 of the air filter 1 generally forms rectangular with air channel 2.

Since the air guide 5 may be made of materials relatively rigid compared to the materials used to form the air filter, the air guide 5 may strengthen the construction of the air filter 1 as well as have the function as an air guide.

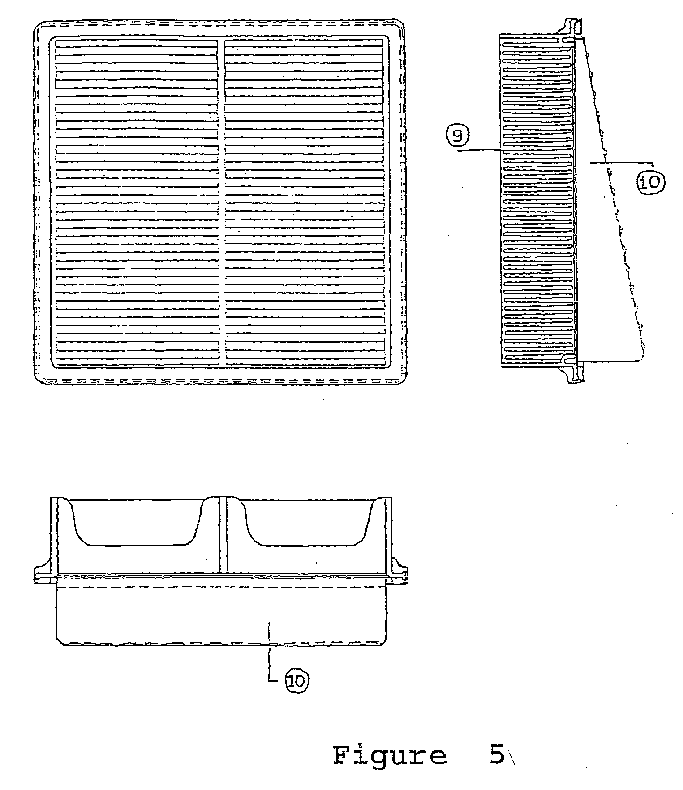

The air guide 5 may be placed in a variety of air filters 1 having different shapes. For example, the air guide 5 as shown in Figure 5 may be placed in an air filter 1 which has a square shape having certain elevation angle to the face of air filter 1. Such installed variations do not decrease the function and advantages of the air guide 5 of said air filter 5.

As mentioned before, figure 6 shows diagram of position of air filter 1 in the internal combustion engine, which is placed before manifold 2 and combustion chamber 3 of the engine.

## Claims

1. An air filter for an internal combustion engine comprising a corrugated filter body (6) with upper and lower portions which are attached to a pair of support rings (4) and an air guide (5) that extends parallel to the filter body (6) and is provided with a plurality of holes (7) uniformly disposed about the air guide (5), **characterized in that** each hole (7) is bounded by a section having a half-cone cross-sectional shape wherein the air guide (5) is placed at a certain elevation angle (8) with respect to the support rings (4) and wherein air flowing through the filter (6) through the air guide (5) is guided as well as rotated, such that when mixed with fuel a uniform air-fuel mixture is generated.

2. An air filter according to claim 1, **characterized in that** the air guide (5) is placed on the inner part of the filter.

3. An air filter according to claim 1, **characterized in that** the air guide (5) is placed on the outer part of the filter.

4. An air filter according to any of the claims 1 to 3, **characterized in that** the holes are oriented in the same direction.

5. An air filter according to any of the preceding claims, **characterized in that** the air guide (5) is made from a material that is more rigid than the material forming the filter body (6).

6. An air filter according to any of the preceding claims, **characterized in that** the air guide (5) is made from metal.

## Patentansprüche

1. Luftfilter für eine Verbrennungskraftmaschine mit einem gewellten Filterkörper (6), der über obere und untere Abschnitte verfügt, die mit einem Paar von Halteringen (4) und einem Luftführungsteil (5) verbunden sind, das sich parallel zum Filterkörper (6) erstreckt und mit einer Vielzahl von Öffnungen (7) versehen ist, die gleichmäßig auf dem Luftführungsteil (5) verteilt sind, **dadurch gekennzeichnet, dass** jede Öffnung (7) durch einen Abschnitt begrenzt ist, der im Längsschnitt die Gestalt eines halben Konus aufweist, und wobei das Luftführungsteil (5) bezüglich der Halteringe (4) mit einem vorbestimmten Anstellwinkel (8) angeordnet ist, und wobei Luft, die durch das Filter (6) durch das Luftführungsteil (5) fließt, sowohl geführt als auch in Rotation versetzt wird, so dass, wenn sie mit Kraftstoff vermischt ist, eine gleichmäßige Luft-Brennstoffmischung erzeugt wird.

2. Luftfilter nach Anspruch 1, **dadurch gekennzeichnet, dass** das Luftführungsteil (5) im Innenraum des Filters angeordnet ist.

3. Luftfilter nach Anspruch 1, **dadurch gekennzeichnet, dass** das Luftführungsteil (5) auf dem Außenteil des Filters angeordnet ist.

4. Luftfilter nach einem der Ansprüche 1 bis 3, **dadurch gekennzeichnet, dass** die Öffnungen in die gleiche Richtung weisen.

5. Luftfilter nach einem der vorstehenden Ansprüche, **dadurch gekennzeichnet, dass** das Luftführungsteil (5) aus einem Material hergestellt ist, das steifer als das Material ist, welches den Filterkörper (6) bildet.

6. Luftfilter nach einem der vorstehenden Ansprüche, **dadurch gekennzeichnet, dass** das Luftführungsteil (5) aus Metall hergestellt ist.

## Revendications

1. Filtre à air pour moteur à combustion interne comprenant un corps de filtre ondulé (6) avec une partie supérieure et une partie inférieure qui sont attachées à une paire de bagues de support (4) et un guide d'air (5) qui s'étend parallèlement au corps de filtre (6) et disposant d'une pluralité de trous (7) uniformément répartis autour du guide d'air (5), **caractérisé en ce que** chaque trou (7) est délimité par une section ayant une forme en coupe de demi-cône et **en ce que** le guide d'air (5) est placé à un certain angle d'élévation (8) par rapport aux bagues de support (4) et **en ce que** l'air s'écoulant à travers le filtre (6) au travers du guide d'air (5) est guidé ainsi que mis en rotation, de telle sorte que lorsqu'il est mélangé avec du carburant, un mélange uniforme air-carburant est généré.

2. Filtre à air selon la revendication 1, **caractérisé en ce que** le guide d'air (5) est placé dans la partie intérieure du filtre.

3. Filtre à air selon la revendication 1, **caractérisé en ce que** le guide d'air (5) est placé dans la partie extérieure du filtre.

4. Filtre à air selon l'une des revendication 1 à 3, **caractérisé en ce que** les trous sont orientés dans la même direction.

5. Filtre à air selon l'une des revendications précédentes, **caractérisé en ce que** le guide d'air (5) est fabriqué à partir d'un matériel plus rigide que le matériel formant le corps du filtre (6).

6. Filtre à air selon l'une des revendications précédentes, **caractérisé en ce que** le guide d'air (5) est fabriqué à partir de métal.
